# EUROPEAN PATENT APPLICATION

(11) **EP 4 604 359 A1**
(43) Date of publication of application: **20.08.2025**
(21) Application number: 24741401.4
(22) Date of filing: 29.02.2024
(51) Int. Cl.: H02K 1/14, H02K 15/02

(54) **STATOR IRON CORE AND MANUFACTURING METHOD THEREFOR, MOTOR, COMPRESSOR, AND VEHICLE**

(30) Priority: 12.01.2023 CN 202310067909
(71) Applicant: Anhui Welling Auto Parts Co., Ltd., Hefei, Anhui 230088 (CN); Anqing Welling Auto Parts Co., Ltd., Anqing, Anhui 246008 (CN); Guangdong Welling Auto Parts Co., Ltd., Foshan, Guangdong 528311 (CN)
(72) Inventor: KANG, Xiaohu, Hefei, Anhui 230088 (CN); LU, Zhifu, Hefei, Anhui 230088 (CN)
(74) Representative: RGTH
(86) International application number: PCT/CN2024/079366
(87) International publication number: WO 2024/149407

(57) **Abstract**

The present application discloses a stator iron core, a manufacturing method, a motor, a compressor, and a vehicle. The stator iron core comprises a plurality of stator laminations stacked in an axial direction, which comprise a first stator lamination (100) and a second stator lamination (200). Adjacent yoke portions (111) of the first stator lamination (100) are in abutment to form first seams (120), adjacent yoke portions (111) of the second stator lamination (200) are in abutment to form second seams (210). Adjacent first seams (120) and second seams have projections that at least partially do not overlap on a projected plane of the axis perpendicular to the stator core. An enclosed projection region is S, a projection area of a lamination unit (110) is S₀, the stator iron core has a diameter D and an axial height is L, they satisfy the relationship: 0.45% ≤ (L*S)/(D*S₀) ≤ 10.8%.

## Description

### CROSS-REFERENCE TO RELATED APPLICATION

This application claims priority to Chinese Patent Application No. 202310067909.8 filed on January 12, 2023 and entitled "STATOR IRON CORE AND MANUFACTURING METHOD THEREFOR, MOTOR, COMPRESSOR, AND VEHICLE", the disclosure of which is incorporated herein by reference in its entirety.

### TECHNICAL FIELD

The present disclosure relates to the field of motor technology, and particularly to a stator iron core and a manufacturing method therefor, a motor, a compressor, and a vehicle.

### BACKGROUND

In the related art, a yoke portion of a stator iron core of a motor may adopt a segmented structure. Specifically, this segmented structure divides the yoke portion of the stator core into multiple segments in a circumferential direction of the stator iron core. As a result, the stator core has multiple slits that are spaced apart in the circumferential direction of the stator iron core and extend linearly along an axis of the stator iron core. The advantage of this segmented structure is that it improves the winding process, thereby enhancing the utilization of the stator slots and increasing winding speed. However, the drawback is that the slits introduce additional air gaps and eddy currents, reducing the efficiency of the motor, and the stiffness of the stator iron core is also lower relative to a solid stator iron core. At present, some stator iron cores are configured by stacking multiple stator laminations with staggered seams between adjacent layers of stator laminations to reduce the additional air gaps and eddy currents caused by the seams. However, this configuration leads to greater vibration in the stator iron core, resulting in increased noise from the motor.

### SUMMARY

The present disclosure aims to at least partially solve one of the problems existing in the related art. To this end, the present disclosure provides a stator iron core and a method for manufacturing the stator iron core, and a motor and a compressor both having the stator iron core.

According to an embodiment of a first aspect of the present disclosure, there is provided a stator iron core comprising a plurality of stator laminations stacked in an axial direction. Each of the stator laminations comprises a plurality of lamination units connected end-to-end around an axis of the stator iron core, each lamination unit comprising a yoke portion and a tooth portion, with the tooth portion connected to a side of the yoke portion that is proximate to the axis of the stator iron core; and
the plurality of stator laminations comprises a first stator lamination and a second stator lamination, with every two adjacent yoke portions of the first stator lamination abutting against each other to form a first seam, and every two adjacent yoke portions of the second stator lamination abutting against each other to form a second seam.

The first stator lamination and the second stator lamination are adjacent to each other in the axial direction, a projection of the first seam and a projection of the second seam adjacent to each other do not overlap at least in part on a projection plane perpendicular to the axis of the stator iron core. A projection area of a region enclosed by the first seam, the second seam and the yoke portion is S, a projection area of a lamination unit is S₀, the stator iron core has an outer diameter of D and an axial height L, and the following relationship is satisfied: 0.45% ≤ (L*S)/(D*S₀) ≤ 10.8%.

According to some embodiments of the present disclosure, the first seam is linear, the second seam is linear, and on the projection plane perpendicular to the axis of the stator iron core, the projection of the first seam and the projection the second seam adjacent to each other form an angle θ, the angle θ satisfying the following relationship: 2.5° ≤ θ ≤ 120°.

According to some embodiments of the present disclosure, the side of the yoke portion that is proximate to the axis of the stator iron core has a first contour section and a second contour section. One end of the first contour section is connected to the tooth portion, and the other end of the first contour section is connected to the second contour section. The first seam or the second seam has an intersection point with the second contour section, a distance between the intersection point and the first contour section is h, and h satisfies the following relationship: h ≤ 2.5 mm.

According to some embodiments of the present disclosure, a thickness of the stator lamination in the axial direction of the stator iron core is t, and t satisfies the following relationship: t ≤ 2 mm.

According to some embodiments of the present disclosure, the stator lamination comprises a connection portion. The connection portion connects two adjacent yoke portions, a minimum width of the connection portion is τ, and τ satisfies the following relationship: 0.5t ≤ τ ≤ 1.1t or 1.5t ≤ τ ≤ 5t.

According to some embodiments of the present disclosure, the first seam or the second seam comprises a plurality of curves. A minimum arc radius of the curves is Rₘᵢₙ, a maximum arc radius of the curves is Rₘₐₓ, and Rₘᵢₙ and Rₘₐₓ satisfy the following relationship: Rₘᵢₙ ≤ 1.5t, and Rₘₐₓ ≥ 2.5t.

According to some embodiments of the present disclosure, there are provided a plurality of the first stator laminations and a plurality of the second stator laminations. The first stator laminations and the second stator laminations are stacked and staggered in the axial direction of the stator iron core.

According to some embodiments of the present disclosure, the lamination unit is provided with rivets, which are located on the lamination unit at two sides along the axial direction, and the rivets are capable of connecting the adjacent stator laminations together.

According to some embodiments of the present disclosure, each of the stator laminations comprises N lamination units, with N satisfying the following relationship: 3 ≤ N ≤ 48.

According to an embodiment of a second aspect of the present disclosure, there is provided a manufacturing method, comprising the steps of:
punching out the first stator lamination and the second stator lamination from a sheet material in a staggered arrangement;
stacking the first stator laminations and the second stator laminations one by one in an axial direction; and
compressing the stacked first stator laminations and second stator laminations into a ring shape, such that every two adjacent yoke portions of the first stator lamination abut against each other to form a first seam, every two adjacent yoke portions of the second stator lamination abut against each other to form a second seam, and the projection of the adjacent first seam and the projection of second seam in the axial direction at least partially do not overlap, thereby obtaining the stator iron core.

According to some embodiments of the present disclosure, in the step of stacking the first stator laminations and the second stator laminations one by one in an axial direction, the first stator laminations and the second stator laminations are stacked in an staggered manner.

According to an embodiment of a third aspect of the present disclosure, there is provided a motor, comprising the stator iron core according to the embodiment of the first aspect of the present disclosure.

According to an embodiment of a fourth aspect of the present disclosure, there is provided a compressor, comprising the motor according to the embodiment of the third aspect of the present disclosure.

According to an embodiment of a fifth aspect of the present disclosure, there is provided a vehicle, comprising the compressor according to the embodiment of the fourth aspect of the present disclosure.

Additional aspects and advantages of the present disclosure will be set forth in part in the following description, and in part will be apparent from the following description, or may be learned by practice of the present disclosure.

### BRIEF DESCRIPTION OF DRAWINGS

FIG. 1 is a schematic structural diagram of a stator iron core according to some embodiments of the present disclosure;
FIG. 2 is a schematic sectional diagram of the stator iron core of FIG. 1 taken along line A-A;
FIG. 3 is an enlarged view at B in FIG. 1;
FIG. 4 is a schematic structural diagram of a first stator lamination according to some embodiments of the present disclosure;
FIG. 5 is a schematic structural diagram of a second stator lamination according to some embodiments of the present disclosure;
FIG. 6 and FIG. 7 are illustrations of a part of a manufacturing process of the stator iron core in FIG. 1;
FIG. 8 is a schematic view from another angle of FIG. 7;
FIG. 9 is an enlarged view at C in FIG. 8;
FIG. 10 is a graph illustrating the relationship between the inherent frequency f of the stator iron core and S/S₀;
FIG. 11 is a graph illustrating the relationship between the inherent frequency f of the stator iron core and (L*S)/(D*S₀);
FIG. 12 is a schematic structural diagram of a stator iron core according to another embodiment of the present disclosure;
FIG. 13 is an enlarged view at D in FIG. 12; and
FIG. 14 and FIG. 15 are illustrations of a part of a manufacturing process of the stator iron core in FIG. 12.

List of reference signs:
first stator lamination 100; lamination unit 110; yoke portion 111; tooth portion 112; connection portion 113; first seam 120;
second stator lamination 200; and second seam 210.

### DETAILED DESCRIPTION

Embodiments of the present disclosure will be described in detail below. Examples of the embodiments are illustrated in the accompanying drawings, where the same or like reference numerals throughout indicates the same or like elements having the same or like functions. The embodiments described below with reference to the accompanying drawings are exemplary and are intended only to explain the present disclosure instead of being construed as limiting the present disclosure.

In the description of the present disclosure, it should be understood that, descriptions relating to orientation, for example, orientation or positional relationships indicated by "up", "down", "front", "rear", "left", "right", etc. are based on the orientation or positional relationships shown in the accompanying drawings, and are to facilitate the description of the present disclosure and simplify the description only, rather than indicating or implying that the device or element referred to must have a specific orientation or be constructed and operated in a specific orientation, and therefore cannot be construed as limiting the present disclosure.

In the description of the present disclosure, the meaning of "several" is one or a plurality; the meaning of "a plurality of" is two or more; "greater than", "less than", "more than", etc. are to be construed as excluding a given figure; and "above", "below", "within", etc. are to be construed as comprising a given figure. If "first" and "second", etc. are referred to, it is only for the purpose of distinguishing technical features, and shall not be construed as indicating or implying relative importance or implying the number of the indicated technical features or implying the sequence of the indicated technical features.

In the description of the present disclosure, unless otherwise explicitly defined, the terms such as "arrange", "install", "connect", "assemble", and "fit" should be construed in a broad sense, and those of ordinary skill in the art can determine the specific meanings of the above terms in the present disclosure in a rational way in conjunction with the specific contents of the technical schemes.

In the related art, a yoke portion of a stator iron core of a motor may adopt a segmented structure. Specifically, this segmented structure divides the yoke portion of the stator core into multiple segments in a circumferential direction of the stator iron core, resulting in multiple slits that are spaced in the circumferential direction of the stator iron core and extend linearly along an axis of the stator iron core. The advantage of this segmented structure is that it improves the winding process, thereby enhancing the utilization of the stator slots and increasing winding speed. However, the drawback is that the slits introduce additional air gaps and eddy currents, reducing the efficiency of the motor, and the stiffness of the stator iron core is also lower relative to a solid stator iron core. At present, some stator iron cores are configured by stacking multiple stator laminations with staggered seams between adjacent layers of stator laminations to reduce the additional air gaps and eddy currents caused by the seams. However, this configuration leads to greater vibration in the stator iron core, resulting in increased noise from the motor.

To solve at least one of the above-described problems, the present disclosure proposes a stator iron core capable of improving vibration conditions and reducing noise.

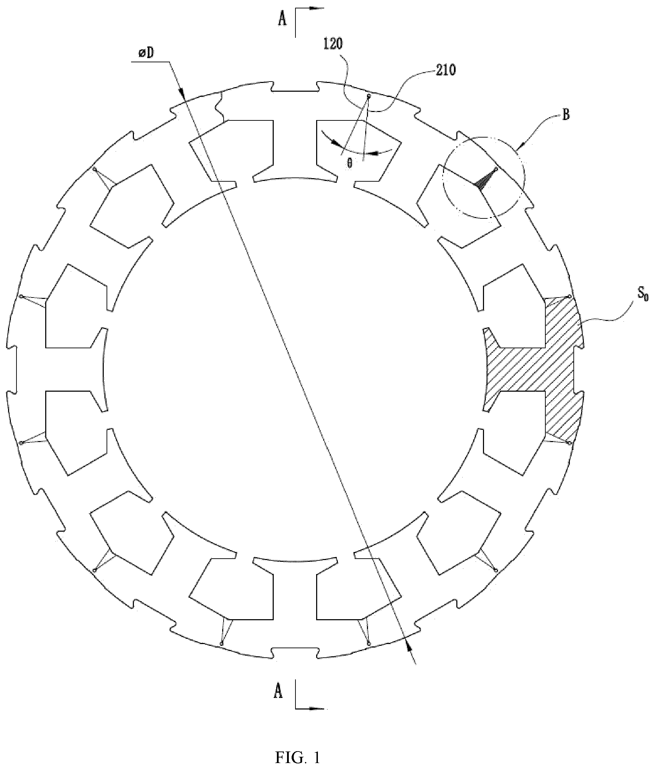

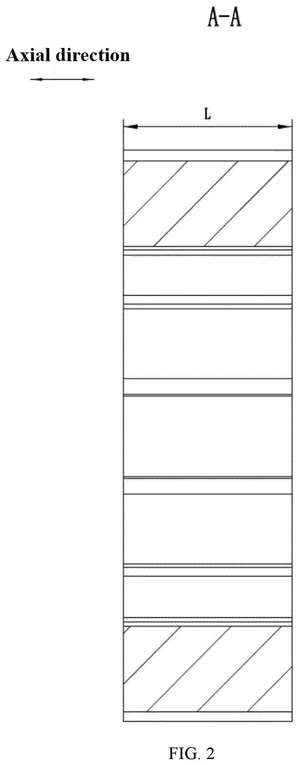

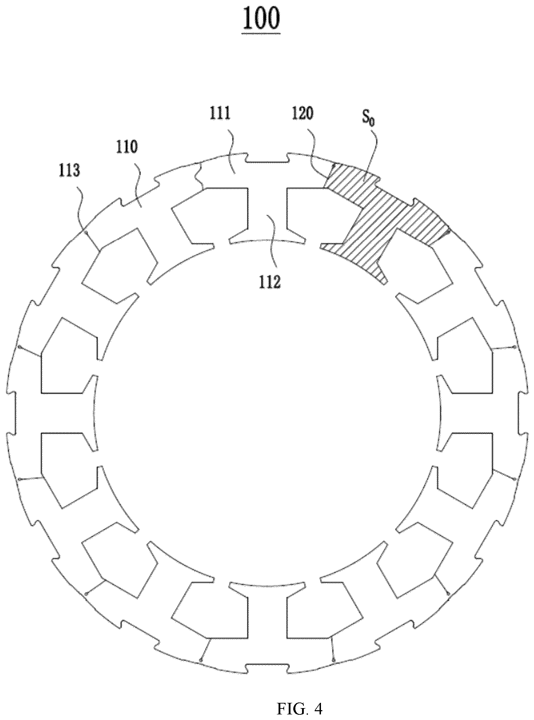

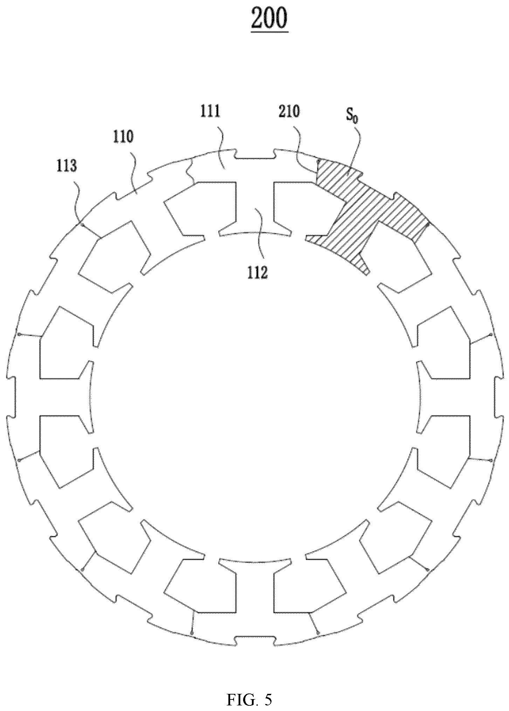

Referring to FIGS. 1 to 5, an embodiment of the first aspect of the present disclosure provides a stator iron core, comprising a plurality of stator laminations stacked in an axial direction. Each stator lamination comprises a plurality of lamination units 110, and the plurality of lamination units 110 are connected end-to-end in a ring shape about an axis of the stator iron core. The lamination units 110 are substantially T-shaped. Each lamination unit 110 comprises a yoke portion 111 and a tooth portion 112, with the tooth portion 112 connected to one side of the yoke portion 111 that is proximate to the axis of the stator iron core. Herein, the plurality of stator laminations comprise a first stator lamination 100 and a second stator lamination 200, and at least one first stator lamination 100 and one second stator lamination 200 are disposed adjacent to each other in the axial direction. Every two adjacent yoke portions 111 of the first stator lamination 100 abut against each other to form a first seam 120, and every two adjacent yoke portions 111 of the second stator lamination 200 abut against each other to form a second seam 210. Herein, the first stator lamination 100 and the second stator lamination 200 are adjacent to each other in the axial direction, the first seam 120 and the second seam 210 adjacent to each other have projections that do not overlap in part on a projection plane perpendicular to the axis of the stator iron core, in which case a projection area of a region enclosed by the first seam 120, the second seam 210 and one side of the yoke portion 111 that is proximate to the axis of the stator iron core is denoted as S, a projection area of each lamination unit 110 is substantially the same and is denoted as S₀, the stator iron core has an outer diameter of D and an axial height L, and the following relationship is satisfied: 0.45% ≤ (L*S)/(D*S₀) ≤ 10.8%.

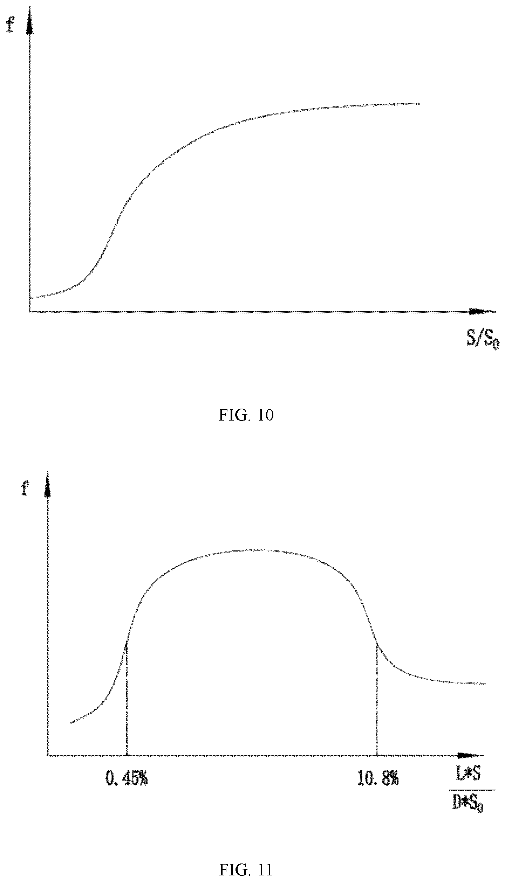

It should be noted that research has shown that when the stator iron core is in a ring shape, its inherent frequency f is related to the value of S/S₀, as shown in FIG. 10. Therefore, by adjusting the value of S/S₀, the inherent frequency f of the stator iron core can be adjusted, such that the inherent frequency f of the stator iron core can avoid reaching the resonance frequency point of the motor when it is operating, thereby reducing the noise produced by motor operation. Further research has shown that the correlation between the inherent frequency f of the stator iron core and S/S₀ exhibits high reproducibility only for specific diameters and stack heights of the stator iron core. When there are significant changes in the diameter or stack height of the stator iron core, the correlation curve shown in FIG. 10 will not be reproducible. For this reason, the present disclosure conducts further correlation research on the above parameters, and finds that f is also significantly correlated with L and D. Specifically, f is correlated with (L*S)/(D*S₀). As shown in FIG. 11, when the value of (L*S)/(D*S₀) is in the range of 0.45% to 10.8%, the inherent frequency f of the stator iron core is relatively high and stable, so that the inherent frequency f of the stator iron core can avoid reaching the resonance frequency point of the motor when it is operating, which contributes to reducing the noise of the motor. Thus, in some embodiments of the present disclosure, by reasonably designing the relationship between L, D, S and S₀ of the stator iron core, it is beneficial to improve the vibration conditions of the stator iron core and significantly optimize the motor noise. For example, the table below lists some preferred dimensions for specific implementations:

| Serial No. | D/mm | L/mm | S/S₀ | (L·S)/(D·S₀) |
|---|---|---|---|---|
| 1 | 90 | 25-65 | 1.6%-15.0% | 0.45%-10.8% |
| 2 | 100 | 20-60 | 2.3%-18.0% | 0.45%-10.8% |
| 3 | 110 | 15-55 | 3.3%-21.6% | 0.45%-10.8% |

It should be noted that the above-described values of L, D, and S/S₀ are merely some examples of specific implementation of the present disclosure, and cannot be understood as limiting the present disclosure, and for example, D may be 101 mm or 102 mm, or the like.

It should be noted that as the stator iron core comprises the first stator laminations 100 and the second stator laminations 200, with the first stator laminations 100 having the first seams 120, and the second stator laminations 200 having the second seams 210. The first stator lamination 100 and the second stator lamination 200 are adjacent to each other in the axial direction, the first seam 120 and the second seam 210 adjacent to each other have projections that do not overlap at least in part on a projection plane perpendicular to the axis of the stator iron core, which helps to alleviate the additional air gaps and eddy currents caused by the seams of the stator iron core, thereby benefiting the enhancement of motor efficiency.

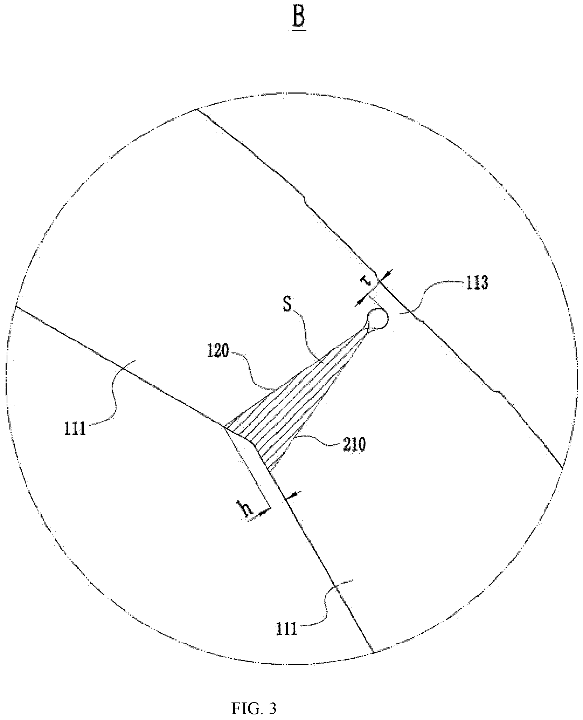

Referring to FIGS. 1 and 3, it can be understood that, in some embodiments of the present disclosure, the first seam 120 is substantially linear, the second seam 210 is also substantially linear. And on the projection plane perpendicular to the axis of the stator iron core, the projection of the first seam 120 and the projection of the second seam 210 adjacent to each other form an angle θ, the angle θ satisfying the following relationship: 2.5° ≤ θ ≤ 120°. On the projection plane perpendicular to the axis of the stator iron core, since S is the projection area of the region enclosed by the first seam 120, the second seam 210, and the yoke portion 111, and θ is the angle between the projection of the first seam 120 and the projection of the second seam 210, it can be understood that the value of S increases as the value of θ increases, and the value of S decreases as the value of θ decreases. When the value of θ is too small, the value of S is also relatively small, which makes the value of (L*S)/(D*S₀) also relatively small and exceed the appropriate range, causing the inherent frequency f of the stator iron core to approach or reach the resonance frequency point of the motor, thus causing excessive noise of the motor; and when the value of θ is too large, the value of S is also relatively large, which makes the value of (L*S)/(D*S₀) also relatively large and exceed the appropriate range, causing the inherent frequency f of the stator iron core to approach or reach the resonance frequency point of the motor, thus causing excessive noise of the motor. Therefore, in the present disclosure, by setting the value of θ in the range of 2.5° to 120°, the value of (L*S)/(D*S₀) can remain within an appropriate range, so that the inherent frequency f of the stator iron core can avoid reaching the resonance frequency point of the motor when it is operating, which is beneficial to improve the vibration conditions of the stator iron core, thereby reducing the noise of the motor.

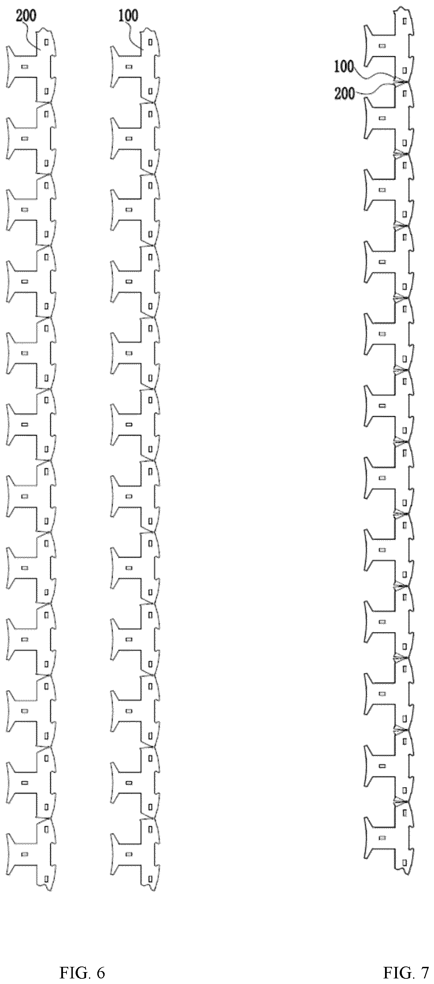

Referring to FIGS. 1 and 3, it can be understood that, in some embodiments of the present disclosure, the side of the yoke portion 111 that is proximate to the axis of the stator iron core has a first contour section and a second contour section. One end of the first contour section is connected to the tooth portion 112, and the other end of the first contour section is connected to the second contour section. The end of the second contour section that is away from the first contour section abuts against the adjacent yoke portion 111. The first seam 120 and the second contour section have an intersection point, and the distance between the intersection point and the first contour section is h, and h satisfies the following relationship: h ≤ 2.5 mm. Referring to FIGS. 6, 7, and 9, it can be understood that when the first stator lamination 100 is punched out from the a sheet material, the first stator lamination 100 has a straight strip shape at this time, and the intersection point is the protrusion at the end point of the yoke portion 111, and when the height of the protrusion is too high, the difficulty of winding the stator iron core at the position near the yoke portion 111 will be increased. Therefore, in the present disclosure, the value of h is set to 2.5 mm or less, so that the height of the protrusion is relatively low, and thus it is beneficial to improve the winding efficiency of the stator iron core. Certainly, the structure of the second stator lamination 200 is similar to that of the first stator lamination 100, and by setting a relatively low h value, the protrusion height of the yoke portion 111 of the second stator lamination 200 can be relatively low, which is beneficial to improve the winding efficiency of the stator iron core.

In some embodiments of the present disclosure, a thickness of the stator lamination in the axial direction of the stator iron core is t, and t satisfies the following relationship: t ≤ 2 mm. It should be noted that the smaller the thickness of the stator lamination is, the smaller the eddy current loss is, and the better the performance of the motor is. Therefore, in the present disclosure, by setting the thickness of the stator lamination to 2 mm or less, the eddy current loss of the stator iron core can be relatively small, which is beneficial for improving the performance of the motor. It should also be noted that the smaller the thickness of the stator lamination, the higher the cost thereof. Therefore, in some embodiments of the present disclosure, the thickness of the stator lamination is in a range of 0.2 mm to 0.5 mm. Stator laminations within this thickness range can meet the current dimensional requirements in the compressor field. Additionally, laminations in this range exhibit low eddy current losses, while their prices remain reasonable, offering a high cost-performance ratio.

Referring to FIGS. 1 and 3, in some embodiments of the present disclosure, the stator lamination further comprises a connection portion 113. The connection portion 113 connects two adjacent yoke portions 111. In an embodiment, the two adjacent yoke portions 111 are connected by the connection portion 113 at their ends away from the tooth portion 112. The minimum width of the connection portion 113 is τ, and τ satisfies the following relationship: 0.5t ≤ τ ≤ 1.1t or 1.5t ≤ τ ≤ 5t. It should be noted that after the stator laminations are punched out of the sheet material, it is necessary to compress the stator laminations into a ring shape, and when the τ value is too large, the structural strength of the connection portion 113 is relatively high, and the force required to compress the stator laminations is relatively large, which may lead to poor forming performance of the stator laminations, making it difficult to compress the stator laminations into a ring shape; however, when the τ value is too small, the structural strength of the connection portion 113 is relatively low, and the connection portion 113 is likely to be broken during transportation or when the stator lamination is formed into a ring shape. To address this, the research in this application has found that the characteristics of the connecting portion 113 are also related to the thickness t of the stator lamination. Specifically, the range 0.5t ≤ τ ≤ 1.1 t or 1.5t ≤ τ ≤ 5 t is considered reasonable, as shown in the following table:

| t/mm | Preferred value of τ /mm | Recommended range of τ |
|---|---|---|
| 0.2 | 0.5 | 1.5t≤τ≤5t |
| 0.3 | 0.45 | 1.5t≤τ≤5t |
| 0.35 | 0.38 | 0.5t≤τ≤1.1t |
| 0.5 | 0.5 | 0.5t≤τ≤1.1t |
| 1.0 | 0.8 | 0.5t≤τ≤1.1t |

As can be seen from the table, when the value of the thickness t of the stator lamination is relatively small, the value of the minimum width τ of the connection portion 113 is more reasonable in the range of 1.5t to 5t, where the structural strength of the connection portion 113 is relatively moderate, allowing the stator lamination to have good forming performance, while also making the connection portion 113 less prone to breaking during transportation; and when the value of the thickness t of the stator lamination is relatively large, the value of the minimum width τ of the connection portion 113 is more reasonable in the range of 0.5t to 1.1t, where the structural strength of the connection portion 113 is relatively moderate, allowing the stator lamination to have good forming performance, while also making the connection portion 113 less prone to breaking during transportation.

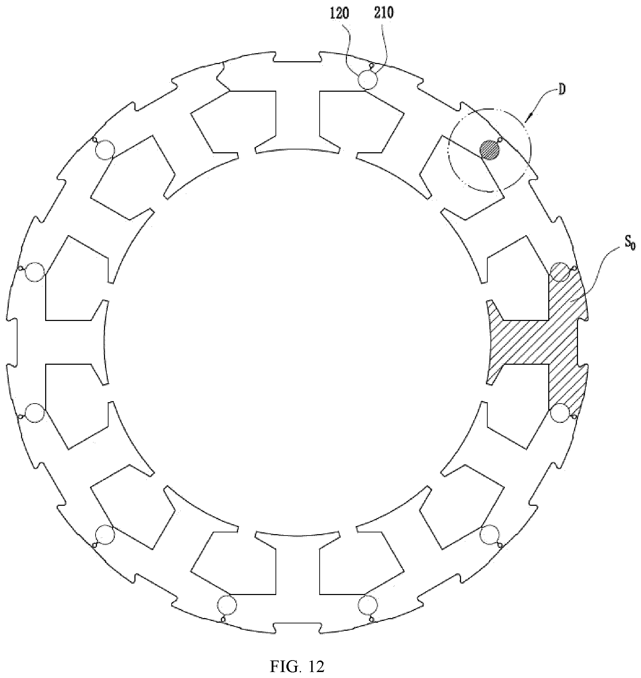

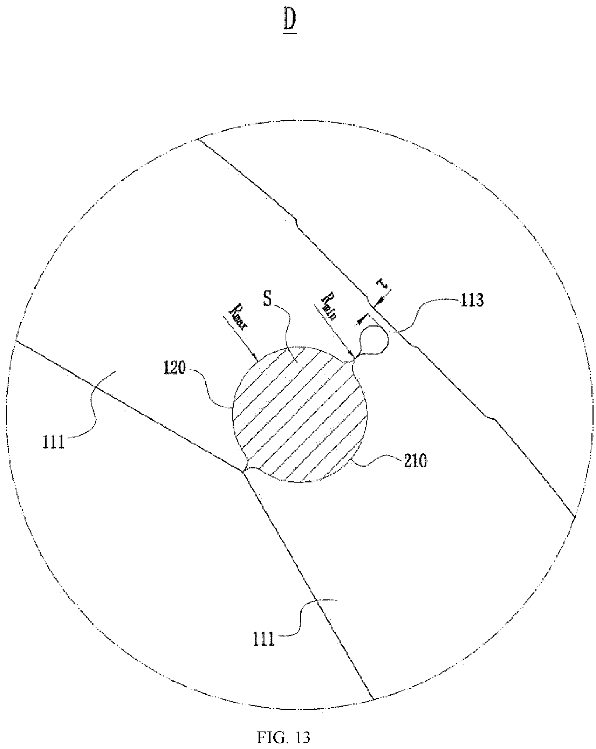

Referring to FIGS. 12 and 13, in some embodiments of the present disclosure, the first seam 120 has a curve shape, where the first seam 120 comprises a plurality of curves, with the minimum arc radius Rₘᵢₙ of the curves satisfying: Rₘᵢₙ≤1.5t, and the maximum arc radius Rₘₐₓ of the curves satisfying: Rₘₐₓ≥2.5t. The curve with the minimum arc radius is proximate to the connecting portion 113. It can be understood that the first seam 120 is formed through punching, and as Rₘᵢₙ increases, the outer diameter of the die required for punching also increases, making it difficult to achieve a small value of τ for the connecting portion 113, which makes it challenging to compress the stator laminations into a ring shape, thereby reducing the forming performance of the stator lamination. Therefore, Rₘᵢₙ should not be set too large. When Rₘᵢₙ ≤ 1.5t, the value of τ for the connecting portion 113 can be made relatively small, which is beneficial for improving the forming performance of the stator lamination. When Rₘₐₓ is relatively small, processing is made more difficult. Therefore, Rₘₐₓ should not be set too small. When Rₘₐₓ ≥ 2.5t, the stator lamination has better processing performance, and the value of S can be easily made in a suitable range, thus helping to reduce the noise of the stator iron core. Similarly, the structure of the second seam 210 is similar to the structure of the first seam 120, and also has a plurality of curves. By reasonably designing the minimum arc radius and the maximum arc radius of the curves, the above-mentioned beneficial effects can also be obtained.

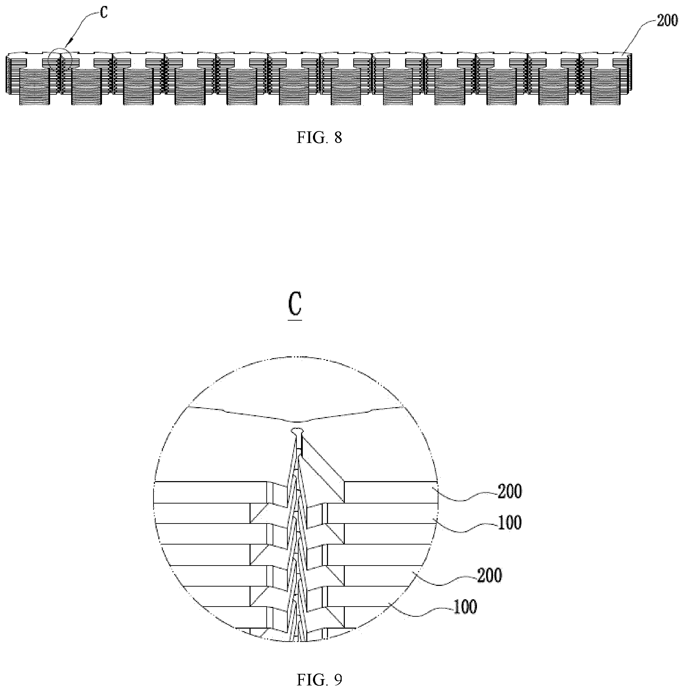

Referring to FIGS. 8 and 9, in some embodiments of the present disclosure, a plurality of the first stator laminations 100 are provided, a plurality of the second stator laminations 200 are provided. The first stator laminations 100 and the second stator laminations 200 are stacked and staggered in the axial direction of the stator iron core, so that the stator iron core can further alleviate the additional air gaps and eddy currents caused by the seams, thereby enhancing the motor efficiency. In an embodiment, the first stator lamination 100 is denoted as A, the second stator lamination 200 is denoted as B, and the first stator laminations 100 and the second stator laminations 200 are stacked in an ABABABA manner. Certainly, the first stator laminations 100 and the second stator laminations 200 may alternatively be stacked in an AABBAABBAA manner, or the first stator laminations 100 and the second stator laminations 200 may alternatively be stacked in an AAABBBAAABBBAAA manner. Certainly, the first stator laminations 100 and the second stator laminations 200 may alternatively be stacked in other similar manners.

It can be understood that, in some embodiments of the present disclosure, the lamination unit 110 is further provided with rivets, which are located on the lamination unit 110 at two sides along the axial direction, and when the stator laminations are arranged in a stacked manner, the adjacent stator laminations can be integrally connected by the rivets, thereby enhancing the structural stability of the stator iron core. In an embodiment, the rivets may be provided on an end surface of the yoke portion 111 or an end surface of the tooth portion 112, or the rivets may be provided on both the end surface of the yoke portion 111 and the end surface of the tooth portion 112, so that adjacent stator laminations can be more stably connected by the rivets. Certainly, after the stator iron core is formed into a ring shape, a weld may be formed between the adjacent yoke portions 111 by a welding method such as laser welding or argon arc welding, which helps to further improve the rigidity of the stator iron core.

It can be understood that, in some embodiments of the present disclosure, each of the stator laminations comprises N lamination units, with N satisfying the following relationship: 3 ≤ N ≤ 48, so that the stator iron core of the present disclosure can meet the slot number requirements of most current synchronous motors, and the application range of the stator iron core of the present disclosure is wider.

An embodiment of a second aspect of the present disclosure provides a method for manufacturing the above-described stator iron core, the method comprising the following steps.

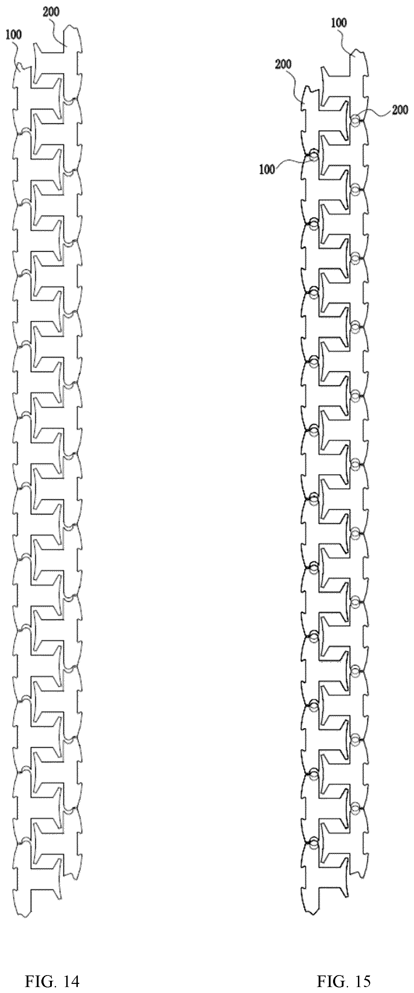

Referring to FIG. 14, the first stator lamination 100 and the second stator lamination 200 are punched out in a staggered arrangement from a sheet material, where the first stator lamination 100 and the second stator lamination 200 are both in a straight strip shape, and a plurality of lamination units 110 are formed on both the first stator lamination 100 and the second stator lamination 200, each lamination unit 110 comprising a yoke portion 111 and a tooth portion 112.

Referring to FIG. 15, when the first stator lamination 100 and the second stator lamination 200 are stacked one by one in the axial direction, winding can be performed on the tooth portion 112 of the stator laminations, thereby improving the flexibility of winding, increasing the utilization rate of the motor slots, and improving the motor efficiency. Specifically, the first stator laminations 100 and the second stator laminations 200 may be stacked and staggered, thereby further alleviating the additional air gaps and eddy currents caused by the seams of the stator iron core.

Referring to FIGS. 12 and 13, the stacked first stator laminations 100 and the second stator laminations 200 are compressed into a ring shape, such that every two adjacent yoke portions 111 of the first stator lamination 100 abut against each other to form the first seam 120, and every two adjacent yoke portions 111 of the second stator lamination 200 abut against each other to form the second seam 210, and projections of the adjacent first seam 120 and second seam 210 in the axial direction do not overlap at least in part, thereby obtaining the stator iron core.

The manufacturing method is simple, and by using a staggered punching approach to produce the first stator lamination 100 and the second stator lamination 200 from the sheet material, the material utilization rate can be improved.

An embodiment of the third aspect of the present disclosure provides a motor. The motor comprises a rotor and a stator, and the stator has a stator iron core according to the embodiment of the first aspect of the present disclosure. The stator iron core comprises a plurality of stator laminations stacked in an axial direction. Each stator lamination comprises a plurality of lamination units 110, and the plurality of lamination units 110 are connected end-to-end in a ring shape about an axis of the stator iron core. The lamination units 110 are substantially T-shaped. Each lamination unit 110 comprises a yoke portion 111 and a tooth portion 112, with the tooth portion 112 connected to one side of the yoke portion 111 that is proximate to the axis of the stator iron core. Herein, the plurality of stator laminations comprise a first stator lamination 100 and a second stator lamination 200, and at least one first stator lamination 100 and one second stator lamination 200 are disposed adjacent to each other in the axial direction. Every two adjacent yoke portions 111 of the first stator lamination 100 abut against each other to form a first seam 120, and every two adjacent yoke portions 111 of the second stator lamination 200 abut against each other to form a second seam 210. Herein, the first stator lamination 100 and the second stator lamination 200 are adjacent to each other in the axial direction, the first seam 120 and the second seam 210 adjacent to each other have projections that do not overlap at least in part on a projection plane perpendicular to the axis of the stator iron core, a projection area of a region enclosed by the first seam 120, the second seam 210 and the yoke portion 111 is S, a projection area of the lamination unit 110 is S₀, the stator iron core has an outer diameter of D and an axial height L, and the following relationship is satisfied: 0.45% ≤ (L*S)/(D*S₀) ≤ 10.8%.

Research has shown that when the stator iron core is in a ring shape, its inherent frequency f is related to the value of S/S₀, as shown in FIG. 10. Therefore, by adjusting the value of S/S₀, the inherent frequency f of the stator iron core can be adjusted, such that the inherent frequency f of the stator iron core can avoid reaching the resonance frequency point of the motor when it is operating, thereby reducing the noise produced by motor operation. Further research has shown that the correlation between the inherent frequency f of the stator iron core and S/S₀ exhibits high reproducibility only for specific diameters and stack heights of the stator iron core. When there are significant changes in the diameter or stack height of the stator iron core, the correlation curve shown in FIG. 10 will not be reproducible. For this reason, the present disclosure conducts further correlation research on the above parameters, and finds that f is also significantly correlated with L and D. Specifically, f is correlated with (L*S)/(D*S₀). As shown in FIG. 11, when the value of (L*S)/(D*S₀) is in the range of 0.45% to 10.8%, the inherent frequency f of the stator iron core is relatively high and stable, which contributes to reducing the noise of the motor. Thus, in some embodiments of the present disclosure, by reasonably designing the relationship between L, D, S and S₀ of the stator iron core, it is beneficial to improve the vibration conditions of the stator iron core and significantly optimize the motor noise.

In the motor according to the embodiment of the third aspect of the present disclosure, by reasonably designing the relationship between L, D, S and S₀ of the stator iron core, the inherent frequency f of the stator iron core can avoid reaching the resonance frequency point of the motor when it is operating, which is beneficial to improve the vibration conditions of the stator iron core, thereby reducing the noise of the motor.

An embodiment of the fourth aspect of the present disclosure provides a compressor, comprising the motor according to the embodiment of the third aspect of the present disclosure. The motor comprises a rotor and a stator, and the stator has a stator iron core according to the embodiment of the first aspect of the present disclosure. The stator iron core comprises a plurality of stator laminations stacked in an axial direction. Each stator lamination comprises a plurality of lamination units 110, and the plurality of lamination units 110 are connected end-to-end in a ring shape about an axis of the stator iron core. The lamination units 110 are substantially T-shaped. Each lamination unit 110 comprises a yoke portion 111 and a tooth portion 112, with the tooth portion 112 connected to one side of the yoke portion 111 that is proximate to the axis of the stator iron core. Herein, the plurality of stator laminations comprise a first stator lamination 100 and a second stator lamination 200, and at least one first stator lamination 100 and one second stator lamination 200 are disposed adjacent to each other in the axial direction. Every two adjacent yoke portions 111 of the first stator lamination 100 abut against each other to form a first seam 120, and every two adjacent yoke portions 111 of the second stator lamination 200 abut against each other to form a second seam 210. Herein, the first stator lamination 100 and the second stator lamination 200 are adjacent to each other in the axial direction, the first seam 120 and the second seam 210 adjacent to each other have projections that do not overlap at least in part on a projection plane perpendicular to the axis of the stator iron core, a projection area of a region enclosed by the first seam 120, the second seam 210 and the yoke portion 111 is S, a projection area of the lamination unit 110 is S₀, the stator iron core has an outer diameter of D and an axial height L, and the following relationship is satisfied: 0.45% ≤ (L*S)/(D*S₀) ≤ 10.8%.

By reasonably designing the relationship between L, D, S and S₀ of the stator iron core, the inherent frequency f of the stator iron core can avoid reaching the resonance frequency point of the motor when it is operating, which is beneficial to improve the vibration conditions of the stator iron core, thereby reducing the noise of the motor and hence the noise of the compressor.

An embodiment of the fifth aspect of the present disclosure provides a vehicle, comprising the compressor according to the embodiment of the fourth aspect of the present disclosure. The vehicle may be a conventional fuel vehicle or a new energy vehicle. By incorporating the aforementioned compressor, noise conditions of the vehicle can be improved, thereby enhancing user comfort of the vehicle.

Although the embodiments of the present disclosure have been described in detail above with reference to the accompanying drawings, the present disclosure is not limited to the above embodiments, and various changes may be made within the knowledge of those of ordinary skill in the art without departing from the purpose of the present disclosure.

## Claims

1. A stator iron core comprising:
a plurality of stator laminations stacked in an axial direction, each of the stator laminations comprising a plurality of lamination units connected end-to-end around an axis of the stator iron core, and each lamination unit comprising a yoke portion and a tooth portion, with the tooth portion connected to a side of the yoke portion that is proximate to the axis of the stator iron core; and
the plurality of stator laminations comprising a first stator lamination and a second stator lamination, with every two adjacent yoke portions of the first stator lamination abutting against each other to form a first seam, and every two adjacent yoke portions of the second stator lamination abutting against each other to form a second seam,
wherein the first stator lamination and the second stator lamination are adjacent to each other in the axial direction, a projection of the first seam and a projection of the second seam adjacent to each other do not overlap at least in part on a projection plane perpendicular to the axis of the stator iron core,
a projection area of a region surrounded by the first seam, the second seam and the yoke portion is S, a projection area of the lamination unit is S₀, the stator iron core has an outer diameter of D and an axial height L, and the following relationship is satisfied: 0.45% ≤ (L*S)/(D*S₀) ≤ 10.8%.

2. The stator iron core of claim 1, wherein the first seam is linear, the second seam is linear, and on the projection plane perpendicular to the axis of the stator iron core, the projection of the first seam and the projection of the second seam adjacent to each other form an angle θ, the angle θ satisfying the following relationship: 2.5° ≤ θ ≤ 120°.

3. The stator iron core of claim 2, wherein the side of the yoke portion that is proximate to the axis of the stator iron core has a first contour section and a second contour section, an end of the first contour section is connected to the tooth portion, and an other end of the first contour section is connected to the second contour section, the first seam or the second seam has an intersection point with the second contour section, a distance between the intersection point and the first contour section is h, and h satisfies the following relationship: h ≤ 2.5 mm.

4. The stator iron core of any one of claims 1 to 3, wherein a thickness of the stator lamination in the axial direction of the stator iron core is t, and t satisfies the following relationship: t ≤ 2 mm.

5. The stator iron core of claim 4, wherein the stator lamination further comprises a connection portion, the connection portion connects two adjacent yoke portions, a minimum width of the connection portion is τ, and τ satisfies the following relationship: 0.5t ≤ τ ≤ 1.1t or 1.5t ≤ τ ≤ 5t.

6. The stator iron core of claim 5, wherein the first seam or the second seam comprises a plurality of curves, a minimum arc radius of the curves is Rₘᵢₙ, a maximum arc radius of the curves is Rₘₐₓ, wherein Rₘᵢₙ and Rₘₐₓ satisfy the following relationship: Rₘᵢₙ ≤ 1.5t, and Rₘₐₓ ≥ 2.5t.

7. The stator iron core of any one of claims 1 to 6, wherein a plurality of the first stator laminations are provided, a plurality of the second stator laminations are provided, and the first stator laminations and the second stator laminations are stacked and staggered in the axial direction of the stator iron core.

8. The stator iron core of any one of claims 1 to 7, wherein the lamination unit is provided with rivets located at two sides of the lamination unit along the axial direction, and the rivets are capable of connecting the adjacent stator laminations together.

9. The stator iron core of any one of claims 1 to 8, wherein each of the stator laminations comprises N lamination units, with N satisfying the following relationship: 3 ≤ N ≤ 48.

10. A method for manufacturing a stator iron core of any one of claims 1 to 9, the method comprising:
punching out a first stator lamination and a second stator lamination from a sheet material in a staggered arrangement;
stacking the first stator laminations and the second stator laminations one by one in an axial direction; and
compressing the stacked first stator laminations and second stator laminations into a ring shape, such that every two adjacent yoke portions of the first stator lamination abut against each other to form a first seam, every two adjacent yoke portions of the second stator lamination abut against each other to form a second seam, and a projection of the adjacent first seam and a projection of second seam in the axial direction do not overlap at least in part, thereby obtaining the stator iron core.

11. The manufacturing method of claim 10, wherein, in the step of stacking the first stator laminations and the second stator laminations one by one in the axial direction, the first stator laminations and the second stator laminations are stacked in a staggered arrangement.

12. A motor, comprising a stator iron core of any one of claims 1 to 9.

13. A compressor, comprising a motor of claim 12.

14. A vehicle, comprising a compressor of claim 13.
